# EUROPÄISCHE PATENTSCHRIFT

(11) **EP 4 022 758 B1**
(45) Veröffentlichungstag und Bekanntmachung des Hinweises auf die Patenterteilung: **06.09.2023**
(21) Anmeldenummer: 20743093.5
(22) Anmeldetag: 13.07.2020
(51) Int. Cl.: H02M 3/335, H02M 1/00

(54) **ANSTEUERVERFAHREN FÜR EINEN GLEICHSPANNUNGSWANDLER UND GLEICHSPANNUNGSWANDLER**
CONTROL METHOD FOR A DC/DC CONVERTER AND DC/DC CONVERTER
PROCEDE DE COMMANDE POUR UN CONVERTISSEUR CC/CC ET UN CONVERTISSEUR CC/CC

(30) Priorität: 28.08.2019 DE 102019212888
(43) Veröffentlichungstag der Anmeldung: 06.07.2022
(73) Patentinhaber: Robert Bosch GmbH, 70442 Stuttgart (DE)
(72) Erfinder: RIEDEL, Jan, 70372 Stuttgart (DE); WINTER, Christian, 71638 Ludwigsburg (DE)
(86) Internationale Anmeldenummer: PCT/EP2020/069726
(87) Internationale Veröffentlichungsnummer: WO 2021/037433

(56) Entgegenhaltungen:
- EP-A1- 3 324 528
- CN-A- 103 929 065
- DE-A1-102016 220 358
- JP-A- 2018 133 964
- US-A1- 2015 214 847

## Beschreibung

Die vorliegende Erfindung betrifft ein Verfahren zur Ansteuerung eines Gleichspannungswandlers, insbesondere eines Phase-Shifted-Full-Bridge-Gleichspannungswandlers. Ferner betrifft die vorliegende Erfindung einen Gleichspannungswandler wie zum Beispiel einen Phase-Shifted-Full-Bridge-Gleichspannungswandler.

### Stand der Technik

Zur Konvertierung einer ersten Gleichspannung in eine zweite Gleichspannung mit anderer Spannungshöhe sind Gleichspannungswandler bekannt. Insbesondere umfasst die Gruppe der Gleichspannungswandler auch sogenannte Phase-Shifted-Full-Bridge-Gleichspannungswandler. Diese Gleichspannungswandler können unter bestimmten Rahmenbedingungen auch einen Leistungstransfer von der Sekundärseite auf die Primärseite realisieren, sofern auf der Sekundärseite auch aktive Schaltelemente eingesetzt werden. Beispielsweise können Gleichspannungswandler eingesetzt werden, um ein Hochvoltnetz eines Elektrofahrzeugs mit dem Niedervoltnetz des Fahrzeugs zu koppeln und elektrische Energie zwischen den beiden Bordnetzen eines solchen Elektrofahrzeugs zu übertragen.

Die Druckschrift DE 10 2016 200 662 A1 offenbart einen bidirektionalen Gleichspannungswandler zur Energieübertragung zwischen einem Hochvoltnetz und einem Niedervoltnetz eines Elektrofahrzeugs. Der Wandler umfasst mindestens einen Transformator zur galvanischen Trennung der beiden Bordnetze, elektronische Schalter zum Umpolen der Wicklungen des

Transformators sowie eine Steuereinrichtung zum Steuern der Schalter.

Insbesondere soll der Gleichspannungswandler ein Aufladen eines Zwischenkreiskondensators auf der Hochvoltseite ermöglichen. Aus den Druckschriften US 2015/214847 A1, EP 3 324 528 A1, DE 10 2016 220358 A1, JP 2018 133964 A und CN 103 929 065 A sind Verfahren zur Ansteuerung von Gleichspannungswandlern bekannt.

### Offenbarung der Erfindung

Die vorliegende Erfindung offenbart ein Verfahren zur Ansteuerung eines Gleichspannungswandlers nach Patentanspruch 1 sowie einen Gleichspannungswandler nach Patentanspruch 7. Weitere Ausführungsformen sind Gegenstand der abhängigen Patentansprüche.

### Vorteile der Erfindung

Der vorliegenden Erfindung liegt die Kenntnis zugrunde, dass bei konventionellen Ansteuerverfahren für Gleichspannungswandler, wie zum Beispiel Phase-Shifted-Full-Bridge-Gleichspannungswandler, im lückenden Betrieb (Discontinuous Conduction Mode, DCM) einige Schaltelemente zum Teil hart geschaltet werden, das heißt es erfolgt ein Ansteuern des entsprechenden Schaltelements, während über dem Schaltelement eine elektrische Spannung anliegt. Ein derartiges hartes Schalten des Schaltelements führt zu höheren elektrischen Verlusten, als dies beispielsweise bei einem weichen Einschalten der Fall ist, bei dem keine oder nur eine sehr geringe elektrische Spannung über dem entsprechenden Schaltelement anliegt.

Es ist daher eine Idee der vorliegenden Erfindung, dieser Erkenntnis Rechnung zu tragen und ein verbessertes Ansteuerverfahren für einen Gleichspannungswandler vorzusehen, bei dem die Schaltelemente des Gleichspannungswandlers vorzugsweise weich geschaltet werden. Hierdurch können die elektrischen Verluste während der Schaltvorgänge gesenkt werden. Darüber hinaus sind Schaltvorgänge mit keiner oder nur einer geringen elektrischen Spannung über dem Schaltelement für das entsprechende Schaltelement auch weniger belastend, so dass die Schaltelemente geschont und damit die Lebensdauer erhöht werden kann.

Das erfindungsgemäße Schalten des Gleichspannungswandlers kann dabei vollständig auf Grundlage einer konventionellen Hardware erfolgen. Somit sind keine weiteren Bauteile und damit keine höhere Kosten erforderlich.

Das Verfahren zur Ansteuerung des Gleichspannungswandlers kann insbesondere im sogenannten lückenden Betrieb oder English "Discontinuous Conduction Mode (DCM)" angewendet werden. Insbesondere kann das Ansteuerverfahren für sogenannte Phase-Shifted-Full-Bridge-Gleichspannungswandler angewendet werden. Für das erfindungsgemäße Einstellen der Schaltzustände auf der Sekundärseite des Gleichspannungswandlers ist dabei auch auf der Sekundärseite eine Vollbrücke mit zwei Halbbrücken erforderlich, wobei jede Halbbrücke zwei in Serie geschaltete Schaltelemente aufweist. Eine derartige Vollbrücke auf der Sekundärseite des Gleichspannungswandlers ermöglicht auch bei konventionellen Gleichspannungswandlern eine aktive Gleichrichtung.

Mittels der Schaltelemente der sekundärseitigen Vollbrücke ist es dabei erfindungsgemäß möglich, sekundärseitig einen elektrischen Strom in dem Transformator einzuprägen, während der Transformator primärseitig über mindestens zwei Schaltelemente der primärseitigen Vollbrücke kurzgeschlossen ist. Durch den eingeprägten Strom in dem Transformator können daraufhin die Schaltelemente eines Diagonalzweigs in der primärseitigen Vollbrücke weich eingeschaltet werden.

Gemäß einer Ausführungsform umfasst das Verfahren einen ersten Teil mit einem Schritt zum Ansteuern eines ersten Diagonalzweigs in der sekundärseitigen Vollbrücke, während die Primärseite des Transformators mittels der primärseitigen Vollbrücke kurzgeschlossen ist. Anschließend werden die Schaltelemente, die in einem ersten Diagonalzweig der Primärseite liegen eingeschaltet. Daraufhin werden die Anschlüsse der Primärseite des Transformators mittels der primärseitigen Vollbrücke elektrisch miteinander verbunden und somit die Primärseite des Transformators kurzgeschlossen. Im weiteren Verlauf werden alle Schaltelemente in der sekundärseitigen Vollbrücke geöffnet. In einem zweiten Teil umfasst das Verfahren einen Schritt zum Ansteuern eines zweiten Diagonalzweigs in der sekundärseitigen Vollbrücke, während die Primärseite des Transformators mittels der primärseitigen Vollbrücke kurzgeschlossen ist. Anschließend werden die Schaltelemente eines zweiten Diagonalzweig der primärseitigen Vollbrücke geschlossen, d.h. eingeschaltet. Daraufhin werden die Anschlüsse der Primärseite des Transformators mittels der primärseitigen Vollbrücke elektrisch miteinander verbunden und somit die Primärseite des Transformators kurzgeschlossen, Schließlich werden alle Schaltelemente der sekundärseitigen Vollbrücke geöffnet. Dabei ist der zweite Diagonalzweig der sekundärseitigen Vollbrücke komplementär zu dem ersten Diagonalzweig der sekundärseitigen Vollbrücke. Mit anderen Worten, während in dem ersten Teil ein oberes Schaltelement in einer ersten Halbbrücke und ein unteres Schaltelement in einer zweiten Halbbrücke angesteuert wird, erfolgt in dem zweiten Teil ein Ansteuern eines oberen Schaltelements in der zweiten Halbbrücke und ein Ansteuern eines unteren Schaltelements in der ersten Halbbrücke der Vollbrücke. Analog ist der zweite Diagonalzweig der primärseitigen Vollbrücke komplementär zu dem ersten Diagonalzweig der primärseitigen Vollbrücke.

Gemäß einer Ausführungsform erfolgt das Aktivieren des Diagonalzweigs in der primärseitigen Vollbrücke nachdem der Diagonalzweig in der sekundärseitigen Vollbrücke für eine vorbestimmte Zeitdauer angesteuert ist. Hierdurch kann in der vorbestimmten Zeitdauer, während der Diagonalzweig der sekundärseitigen Vollbrücke angesteuert ist, sich ein elektrischer Strom in den Windungen des Transformators einstellen. Der elektrische Strom wird während der vorbestimmten Zeitdauer in der Regel kontinuierlich ansteigen.

Gemäß einer Ausführungsform kann das Kurzschließen der Primärseite des Transformators mittels Schließen der beiden oberen Schaltelemente oder der beiden unteren Schaltelemente der primärseitigen Vollbrücke erfolgen. Werden die beiden oberen Schaltelemente oder die beiden unteren Schaltelemente der primärseitigen Vollbrücke gleichzeitig geschlossen, so kann sich über die entsprechenden Schaltelemente eine elektrische Verbindung zwischen den Anschlüssen der Primärseite des Transformators einstellen.

Gemäß einer Ausführungsform erfolgt das Kurzschließen der Primärseite des Transformators abwechselnd mittels der oberen Schaltelemente der primärseitigen Vollbrücke und der unteren Schaltelemente der primärseitigen Vollbrücke. Durch das abwechselnde Ansteuern der oberen bzw. unteren Schaltelemente der Vollbrücke können die jeweiligen Schaltelemente gleichmäßig belastet werden. Hierdurch ergibt sich eine möglichst schonende und gleichmäßige Erwärmung.

Gemäß einer Ausführungsform erfolgt das Öffnen der Schaltelemente der sekundärseitigen Vollbrücke, sobald ein elektrischer Strom in dem Transformator abgeklungen ist. Insbesondere können die Schaltelemente der sekundärseitigen Vollbrücke dann geöffnet werden, wenn der elektrische Strom auf der Sekundärseite des Transformators bis auf Null abgeklungen ist.

Gemäß einer Ausführungsform erfolgt das Öffnen der Schaltelemente der sekundärseitigen Vollbrücke bereits bevor ein elektrischer Strom in dem Transformator vollständig abgeklungen ist. In diesem Fall kann der elektrische Strom bis zum vollständigen Abklingen anschließend durch die parallel zu den Schaltelementen vorgesehenen Dioden fließen. Auf diese Weise kann sichergestellt sein, dass die Schaltelemente der sekundärseitigen Vollbrücke tatsächlich geöffnet sind, wenn der elektrische Strom auf der Sekundärseite des Transformators vollständig abgeklungen ist.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Figur 1:: eine schematische Darstellung eines Prinzipschaltbilds, wie es einem Gleichspannungswandler gemäß einer Ausführungsform zugrunde liegt;
- Figur 2:: ein Timing-Diagramm für eine Abfolge der Schaltzustände, wie es einem Verfahren zum Betrieb des Gleichspannungswandlers gemäß einer Ausführungsform zugrunde liegt; und
- Figur 3:: eine schematische Darstellung eines Ablaufdiagramms, wie es einem Verfahren zur Ansteuerung eines Gleichspannungswandlers gemäß einer Ausführungsform zugrunde liegt.

### Ausführungsformen der Erfindung

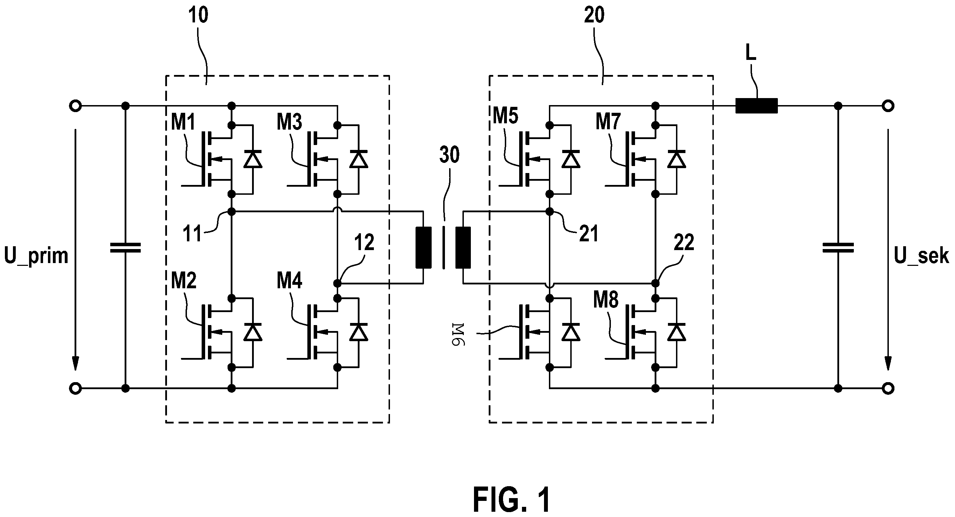

Figur 1 zeigt eine schematische Darstellung eines Prinzipschaltbilds, wie es einem Gleichspannungswandler 1 gemäß einer Ausführungsform zugrunde liegt. Der Gleichspannungswandler 1 umfasst eine primärseitige Vollbrücke 10 und eine sekundärseitige Vollbrücke 20. Zwischen der primärseitigen Vollbrücke 10 und der sekundärseitigen Vollbrücke 20 ist ein Transformator 30 vorgesehen. Die primärseitige Vollbrücke 10 umfasst zwei Halbbrücken mit jeweils zwei Schaltelementen. Ein erstes Schaltelement M1 ist zwischen einem ersten Eingangsanschluss auf der Primärseite des Gleichspannungswandlers und einem ersten Knotenpunkt 11 angeordnet. Ein zweites Schaltelement M2 ist zwischen dem ersten Knotenpunkt 11 und einem zweiten Eingangsanschluss der Primärseite des Gleichspannungswandlers 1 angeordnet. Das erste Schaltelement M1 und das zweite Schaltelement M2 bilden die erste Halbbrücke der ersten Vollbrücke 10. Die zweite Halbbrücke der Vollbrücke 10 umfasst die beiden Schaltelemente M3 und M4. Das dritte Schaltelement M3 ist zwischen dem ersten Eingangsanschluss der Primärseite des Gleichspannungswandlers 1 und einem zweiten Knotenpunkt 12 angeordnet. Das vierte Schaltelement M4 ist zwischen dem zweiten Knotenpunkt 12 und dem zweiten Eingangsanschluss der Primärseite des Gleichspannungswandlers 1 angeordnet. Der ersten Knotenpunkt 11 ist mit einem ersten Anschluss der Primärseite des Transformators 30 verbunden, und der zweite Knotenpunkt 12 ist mit einem zweiten Anschluss der Primärseite des Transformators 30 verbunden.

Die sekundärseitige Vollbrücke 20 umfasst ebenfalls zwei Halbbrücken mit jeweils zwei Schaltelementen. Entsprechend ist ein fünftes Schaltelement M5 zwischen einem ersten Anschluss der Sekundärseite des Gleichspannungswandlers 1 und einem dritten Knotenpunkt 21 angeordnet. Ein sechstes Schaltelement M6 ist zwischen dem dritten Knotenpunkt 21 und einem zweiten Anschluss der Sekundärseite des Gleichspannungswandlers 1 angeordnet. Ein siebtes Schaltelement M7 ist zwischen dem ersten Anschluss der Sekundärseite des Gleichspannungswandlers 1 und einem vierten Knotenpunkt 22 angeordnet. Ein achtes Schaltelement M8 ist zwischen dem vierten Knotenpunkt 22 und dem zweiten Anschluss der Sekundärseite des Gleichspannungswandlers 1 angeordnet. Zwischen einem Verbindungspunkt des fünften Schaltelements M5 und dem siebten Schaltelement M7 auf der einen Seite und dem ersten Anschluss der Sekundärseite des Gleichspannungswandlers 1 auf der anderen Seite kann eine Serieninduktivität L vorgesehen sein. Darüber hinaus kann sowohl eingangsseitig als auch ausgangsseitig jeweils ein Kondensator vorgesehen sein. Zur Ansteuerung der Schaltelemente M1 bis M4 der primärseitigen Vollbrücke 10 sowie der Schaltelemente M5 bis M8 der sekundärseitigen Vollbrücke 20 ist eine Steuereinrichtung 50 vorgesehen. Die Steuereinrichtung 50 kann die Schaltelemente insbesondere entsprechend dem nachfolgend beschriebenen Verfahren ansteuern

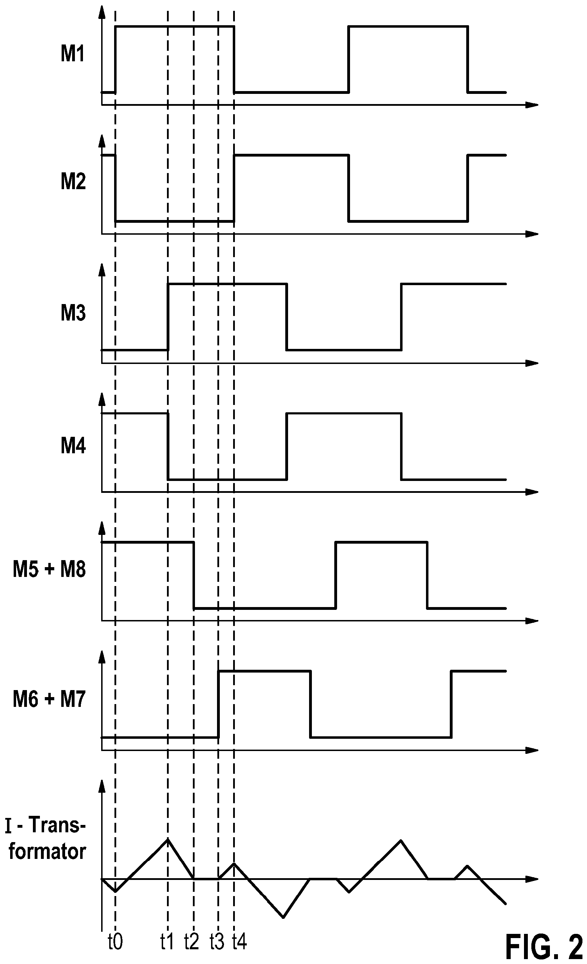

Figur 2 zeigt ein Timing-Diagramm für die Schaltzustände der Schaltelemente in der primärseitigen Vollbrücke 10 und der sekundärseitigen Vollbrücke 20, sowie dem sich daraufhin einstellenden Transformatorstrom I.

Wie in diesem Diagramm zu erkennen ist, sind vor dem Zeitpunkt t0 die beiden unteren Schaltelemente M2 und M4 der primärseitigen Vollbrücke 10 eingeschaltet und somit geschlossen. Hierdurch ist die Primärseite des Transformators 30 kurzgeschlossen. Weiterhin sind kurz vor dem Zeitpunkt t0 die Schaltelemente M5 und M8 in einem ersten Diagonalzweig der sekundärseitigen Vollbrücke 20 geschlossen und die Schaltelemente M6 und M7 des anderen Diagonalzweigs geöffnet. Auf diese Weise kann von der Sekundärseite des Gleichspannungswandlers 1, beispielsweise von einem auf der Sekundärseite angeschlossenen Kondensator, elektrische Energie in den Transformator 30 eingespeist werden und der elektrische Strom in dem Transformator 30 beginnt (hier in negativer Richtung) anzusteigen. Die Steigung des Stromanstiegs wird dabei durch die Serieninduktivität L und die parasitären Induktivitäten des Transformators 30 bestimmt.

Zum Zeitpunkt t0 wird das erste Schaltelement M1 in der primärseitigen Vollbrücke 10 geschlossen und das zweite Schaltelement M2 geöffnet. Auf diese Weise ist in der primärseitigen Vollbrücke 10 ein erster Diagonalzweig über das erste Schaltelement M1 und das vierte Schaltelement M4 aktiv, während die Schaltelemente M2 und M3 des anderen Diagonalzweigs geöffnet sind. Hierbei erfolgt zunächst das Öffnen des zweiten Schaltelements M2 und nach einer Totzeit das Schließen des ersten Schaltelements M1. Durch den negativen Transformatorstrom zum Zeitpunkt t0 ist es möglich, dass das erste Schaltelement M1 weich eingeschaltet werden kann. Daraufhin steigt zwischen dem Zeitpunkt t0 bis zu dem Zeitpunkt t1 der Strom über der Ausgangsdrossel L an.

Zum Zeitpunkt t1 werden die Schaltelemente M3 und M4 geschaltet. Insbesondere wird zunächst das Schaltelement M4 geöffnet und daraufhin das Schaltelement M3 geschlossen. Daraufhin beginnt der elektrische Strom in dem Transformator 30 abzuklingen. Spätestens zum Zeitpunkt t2 werden daraufhin auch die Schaltelemente M5 und M8 des aktiven Diagonalzweigs geöffnet. Um eventuell Probleme mit dem genauen Abschaltzeitpunkt der sekundärseitigen Schalter M5 und M8 zu vermeiden, können diese auch schon bereits vor dem Zeitpunkt t2 abgeschaltet werden. In diesem Fall kann ein verbleibender elektrischer Strom passiv über die parallel zu den Schaltelementen vorgesehenen Dioden abfließen. Zum Zeitpunkt t3 werden die Schaltelemente M6 und M7 des Diagonalzweigs in der sekundärseitigen Vollbrücke 20 geschlossen. Daraufhin beginnt ein elektrischer Strom in dem Transformator 30 anzusteigen. Zum Zeitpunkt t4 wird daraufhin der primärseitige Kurzschluss des Transformators 30 geöffnet und ein Diagonalzweig durch die Schaltelemente M2 und M3 geschlossen. Auch hier kann zunächst das Schaltelement M1 geöffnet werden, um den primärseitigen Kurzschluss aufzuheben und nach einer Totzeit das Schaltelement M2 geschlossen werden. Der weitere Schaltablauf erfolgt dabei korrespondierend zu dem zuvor bereits beschriebenen Ablauf mit umgekehrter Polarität.

Für ein vollständig weiches Schaltverhalten muss dabei entweder der erzeugte Rippel des Ausgangsstroms oder des Magnetisierungsstroms ausreichend Energie zum Umladen der Schalterkapazitäten bereitstellen. Typischerweise ist insbesondere die Ausgangsinduktivität L dabei so klein, dass dies keine Einschränkung darstellt.

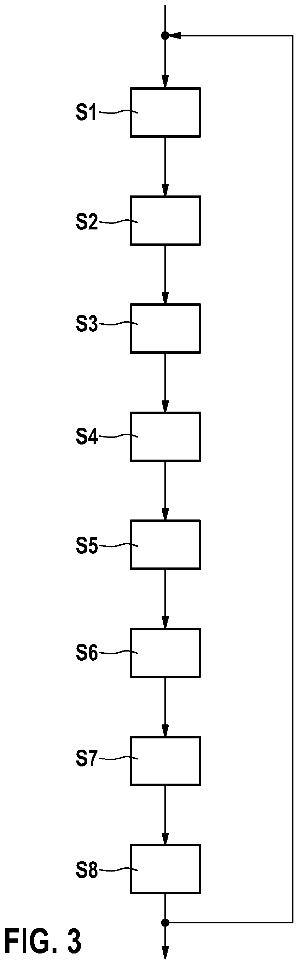

Figur 3 zeigt ein Flussdiagramm, wie es einem Verfahren zur Ansteuerung eines Gleichspannungswandlers 1 gemäß einer Ausführungsform zugrunde liegt. Das Verfahren zum Ansteuern des Gleichspannungswandlers 1 kann dabei insbesondere Schritte umfassen, wie sie zuvor im Zusammenhang mit der Ansteuerung eines Gleichspannungswandlers 1 gemäß Figuren 1 und 2 beschrieben worden sind. Darüber hinaus kann auch der zuvor beschriebene Gleichspannungswandler 1 dazu ausgelegt sein, alle im Nachfolgenden beschriebenen Schritte auszuführen.

In Schritt S1 erfolgt ein Ansteuern eines ersten Diagonalzweigs in der sekundärseitigen Vollbrücke. Beispielsweise kann der erste Diagonalzweig die Schaltelemente M5 und M6 der sekundärseitigen Vollbrücke umfassen. Insbesondere werden die Schaltelemente des sekundärseitigen Diagonalzweigs angesteuert, während die Primärseite des Transformators 30 kurzgeschlossen ist.

In Schritt S2 erfolgt ein Schließen eines ersten Diagonalzweigs der primärseitigen Vollbrücke. In Schritt S3 werden die Anschlusselemente auf der Primärseite des Transformators 30 mittels der primärseitigen Vollbrücke 10 elektrisch miteinander verbunden und somit die Primärseite des Transformators 30 kurzgeschlossen. In Schritt S4 erfolgt ein Öffnen aller Schaltelemente der sekundärseitigen Vollbrücke.

In einem zweiten Teil des Verfahrens erfolgt in Schritt S5 ein Ansteuern eines zweiten Diagonalzweigs in der sekundärseitigen Vollbrücke, während die Primärseite des Transformators mittels der primärseitigen Vollbrücke kurzgeschlossen ist. Der zweite Diagonalzweig der sekundärseitigen Vollbrücke ist dabei komplementär zu dem ersten Diagonalzweig der sekundärseitigen Vollbrücke.

In Schritt S6 erfolgt ein Schließen eines zweiten Diagonalzweigs der primärseitigen Vollbrücke. Der zweite Diagonalzweig der primärseitigen Vollbrücke ist dabei komplementär zu dem ersten Diagonalzweig der primärseitigen Vollbrücke. In Schritt S7 werden die Anschlusselemente auf der Primärseite des Transformators 30 mittels der primärseitigen Vollbrücke 10 elektrisch miteinander verbunden und somit die Primärseite des Transformators 30 kurzgeschlossen. In Schritt S8 schließlich erfolgt ein Öffnen aller Schaltelemente der sekundärseitigen Vollbrücke.

Die zuvor beschriebenen Schritte können für die Energieübertragung von der Primärseite zur Sekundärseite des Gleichspannungswandlers periodisch wiederholt werden.

Zusammenfassend betrifft die vorliegende Erfindung ein Ansteuerverfahren für einen Gleichspannungswandler für eine Energieübertragung von einer Primärseite zur Sekundärseite des Gleichspannungswandlers. Hierbei wird ein spezielles Ansteuerverfahren vorgeschlagen, welches es ermöglicht, die Schaltelemente in dem Gleichspannungswandler überwiegend weich einzuschalten. Somit können die Verluste während des Ansteuerns der Schaltelemente minimiert werden. Insbesondere wird vorgeschlagen, durch vorzeitiges Einschalten der sekundärseitigen Diagonale für einen einstellbaren Zeitraum einen elektrischen Strom in einen Kurzschlusszustand der Primärseite des Transformators einzuprägen.

## Patentansprüche

1. Verfahren zur Ansteuerung eines Gleichspannungswandlers (1) mit einer primärseitigen Vollbrücke (10), einer sekundärseitigen Vollbrücke (20) und einem Transformator (30), der zwischen der primärseitigen Vollbrücke (14) und der sekundärseitigen Vollbrücke (20) angeordnet ist, wobei das Verfahren die folgenden Schritte umfasst, wobei die Schritte für eine Energieübertragung von der Primärseite zur Sekundärseite des Gleichspannungswandlers periodisch wiederholt werden:
Ansteuern (S1) eines ersten Diagonalzweigs in der sekundärseitigen Vollbrücke (20), während die Primärseite des Transformators (30) mittels der primärseitigen Vollbrücke (10) kurzgeschlossen ist,
anschließend, Schließen (S2) eines ersten Diagonalzweigs der primärseitigen Vollbrücke (10);
anschließend, Kurzschließen (S3) der Primärseite des Transformators (30) mittels der primärseitigen Vollbrücke (10);
anschließend, Öffnen (S4) aller Schaltelemente in der sekundärseitigen Vollbrücke (20);
anschließend, Ansteuern (S5) eines zweiten Diagonalzweigs in der sekundärseitigen Vollbrücke (20), während die Primärseite des Transformators (30) mittels der primärseitigen Vollbrücke (10) kurzgeschlossen ist, wobei der zweite Diagonalzweig der sekundärseitigen Vollbrücke (20) komplementär zu dem ersten Diagonalzweig der sekundärseitigen Vollbrücke (20) ist;
anschließend, Schließen (S6) eines zweiten Diagonalzweigs der primärseitigen Vollbrücke (10), wobei der zweite Diagonalzweig der primärseitigen Vollbrücke (10) komplementär zu dem ersten Diagonalzweig der primärseitigen Vollbrücke (10) ist;
anschließend, Kurzschließen (S7) der Primärseite des Transformators (30) mittels der primärseitigen Vollbrücke (10); und
anschließend, Öffnen (S8) aller Schaltelemente in der sekundärseitigen Vollbrücke (20).

2. Verfahren nach Anspruch 1, wobei das Schließen (S2, S6) des Diagonalzweigs in der primärseitigen Vollbrücke (10) erfolgt, nachdem der Diagonalzweigs in der sekundärseitigen Vollbrücke (20) für eine vorbestimmte Zeitdauer angesteuert ist.

3. Verfahren nach einem der Ansprüche 1 bis 2, wobei das Kurzschließen (S3, S7) der Primärseite des Transformators (30) mittels Schließen der beiden oberen Schaltelemente (M1, M3) oder der beiden unteren Schaltelemente (M2, M4) der Vollbrücke (10) erfolgt.

4. Verfahren nach Anspruch 3, wobei das Kurzschließen (S3, S7) der Primärseite des Transformators (30) abwechselnd mittels der oberen Schaltelemente (M1, M3) der primärseitigen Vollbrücke (10) und der unteren Schaltelemente (M2, M4) der primärseitigen Vollbrücke (10) erfolgt.

5. Verfahren nach einem der Ansprüche 1 bis 4, wobei das Öffnen (S4, S8) der Schaltelemente (M5 - M8) der sekundärseitigen Vollbrücke (20) erfolgt, sobald ein elektrischer Strom in dem Transformator (30) abgeklungen ist.

6. Verfahren nach einem der Ansprüche 1 bis 4, wobei das Öffnen (S4, S8) der Schaltelemente (M5 - M8) der sekundärseitigen Vollbrücke (20) erfolgt, bevor ein elektrischer Strom in dem Transformator (30) abgeklungen ist.

7. Gleichspannungswandler (1), mit:
mit einer primärseitigen Vollbrücke (10);
einer sekundärseitigen Vollbrücke (20);
einem Transformator (30), der zwischen der primärseitigen Vollbrücke (10) und der sekundärseitigen Vollbrücke (20) angeordnet ist, und
einer Steuervorrichtung (50), die dazu ausgelegt ist, die erste Vollbrücke (10) und die zweite Vollbrücke (20) gemäß dem Verfahren nach einem der Ansprüche 1 bis 6 anzusteuern.

## Claims

1. Method for controlling a DC-DC voltage converter (1) having a primary-side full bridge (10), a secondary-side full bridge (20) and a transformer (30) which is arranged between the primary-side full bridge (10) and the secondary-side full bridge (20), wherein the method comprises the following steps, wherein the steps are repeated periodically for energy transmission from the primary side to the secondary side of the DC-DC voltage converter:
controlling (S1) a first diagonal branch in the secondary-side full bridge (20) while the primary side of the transformer (30) is short-circuited by means of the primary-side full bridge (10),
subsequently, closing (S2) a first diagonal branch of the primary-side full bridge (10);
subsequently, short-circuiting (S3) the primary side of the transformer (30) by means of the primary-side full bridge (10);
subsequently, opening (S4) all of the switching elements in the secondary-side full bridge (20);
subsequently, controlling (S5) a second diagonal branch in the secondary-side full bridge (20) while the primary side of the transformer (30) is short-circuited by means of the primary-side full bridge (10), wherein the second diagonal branch of the secondary-side full bridge (20) is complementary to the first diagonal branch of the secondary-side full bridge (20);
subsequently, closing (S6) a second diagonal branch of the primary-side full bridge (10), wherein the second diagonal branch of the primary-side full bridge (10) is complementary to the first diagonal branch of the primary-side full bridge (10);
subsequently, short-circuiting (S7) the primary side of the transformer (30) by means of the primary-side full bridge (10); and
subsequently, opening (S8) all of the switching elements in the secondary-side full bridge (20).

2. Method according to Claim 1, wherein the closing (S2, S6) of the diagonal branch in the primary-side full bridge (10) takes place once the diagonal branch in the secondary-side full bridge (20) has been controlled for a predetermined time period.

3. Method according to either of Claims 1 and 2, wherein the short-circuiting (S3, S7) of the primary side of the transformer (30) takes place by means of closing of the two upper switching elements (M1, M3) or of the two lower switching elements (M2, M4) of the full bridge (10).

4. Method according to Claim 3, wherein the short-circuiting (S3, S7) of the primary side of the transformer (30) takes place alternately by means of the upper switching elements (M1, M3) of the primary-side full bridge (10) and the lower switching elements (M2, M4) of the primary-side full bridge (10).

5. Method according to one of Claims 1 to 4, wherein the opening (S4, S8) of the switching elements (M5 - M8) of the secondary-side full bridge (20) takes place as soon as an electrical current in the transformer (30) has decayed.

6. Method according to one of Claims 1 to 4, wherein the opening (S4, S8) of the switching elements (M5 - M8) of the secondary-side full bridge (20) takes place before an electrical current in the transformer (30) has decayed.

7. DC-DC voltage converter (1), having:
a primary-side full bridge (10);
a secondary-side full bridge (20);
a transformer (30) which is arranged between the primary-side full bridge (10) and the secondary-side full bridge (20), and
a control device (50) which is designed to control the first full bridge (10) and the second full bridge (20) in accordance with the method according to one of Claims 1 to 6.

## Revendications

1. Procédé permettant de piloter un convertisseur continu-continu (1) comprenant un pont intégral côté primaire (10), un pont intégral côté secondaire (20) et un transformateur (30) qui est disposé entre le pont intégral côté primaire (10) et le pont intégral côté secondaire (20), dans lequel le procédé comprend les étapes suivantes, dans lequel les étapes destinées à un transfert d'énergie du côté primaire au côté secondaire du convertisseur continu-continu sont répétées périodiquement :
piloter (S1) une première branche diagonale dans le pont intégral côté secondaire (20) alors que le côté primaire du transformateur (30) est court-circuité au moyen du pont intégral côté primaire (10),
ensuite, fermer (S2) une première branche diagonale du pont intégral côté primaire (10) ;
ensuite, court-circuiter (S3) le côté primaire du transformateur (30) au moyen du pont intégral côté primaire (10) ;
ensuite, ouvrir (S4) tous les éléments de commutation dans le pont intégral côté secondaire (20) ;
ensuite, piloter (S5) une deuxième branche diagonale dans le pont intégral côté secondaire (20) alors que le côté primaire du transformateur (30) est court-circuité au moyen du pont intégral côté primaire (10), dans lequel la deuxième branche diagonale du pont intégral côté secondaire (20) est complémentaire à la première branche diagonale du pont intégral côté secondaire (20) ;
ensuite, fermer (S6) une deuxième branche diagonale du pont intégral côté primaire (10), dans lequel la deuxième branche diagonale du pont intégral côté primaire (10) est complémentaire à la première branche diagonale du pont intégral côté primaire (10) ;
ensuite, court-circuiter (S7) le côté primaire du transformateur (30) au moyen du pont intégral côté primaire (10) ; et
ensuite, ouvrir (S8) tous les éléments de commutation dans le pont intégral côté secondaire (20).

2. Procédé selon la revendication 1, dans lequel la fermeture (S2, S6) de la branche diagonale est effectuée dans le pont intégral côté primaire (10) après que la branche diagonale dans le pont intégral côté secondaire (20) est pilotée pendant une durée de temps prédéterminée.

3. Procédé selon l'une quelconque des revendications 1 à 2, dans lequel la mise en court-circuit (S3, S7) du côté primaire du transformateur (30) est effectuée au moyen de la fermeture des deux éléments de commutation supérieurs (M1, M3) ou des deux éléments de commutation inférieurs (M2, M4) du pont intégral (10).

4. Procédé selon la revendication 3, dans lequel la mise en court-circuit (S3, S7) du côté primaire du transformateur (30) est effectuée en alternance au moyen des éléments de commutation supérieurs (M1, M3) du pont intégral côté primaire (10) et des éléments de commutation inférieurs (M2, M4) du pont intégral côté primaire (10).

5. Procédé selon l'une quelconque des revendications 1 à 4, dans lequel l'ouverture (S4, S8) des éléments de commutation (M5 à M8) du pont intégral côté secondaire (20) est effectuée dès qu'un courant électrique dans le transformateur (30) a diminué.

6. Procédé selon l'une quelconque des revendications 1 à 4, dans lequel l'ouverture (S4, S8) des éléments de commutation (M5 à M8) du pont intégral côté secondaire (20) est effectuée avant la diminution d'un courant électrique dans le transformateur (30).

7. Convertisseur continu-continu (1), comprenant :
un pont intégral côté primaire (10) ;
un pont intégral côté secondaire (20) ;
un transformateur (30) qui est disposé entre le pont intégral côté primaire (10) et le pont intégral côté secondaire (20), et
un dispositif de commande (50) qui est conçu pour piloter le premier pont intégral (10) et le deuxième pont intégral (20) selon le procédé selon l'une quelconque des revendications 1 à 6.
